# EUROPÄISCHE PATENTANMELDUNG

(11) **EP 3 144 656 A1**
(43) Veröffentlichungstag der Anmeldung: **22.03.2017**
(21) Anmeldenummer: 16194858.3
(22) Anmeldetag: 20.01.2014
(51) Int. Cl.: G01L 19/04, G01L 19/14, C04B 35/64, G01L 19/00, G01L 19/06

(54) **DRUCKSENSORSYSTEM**

(30) Priorität: 21.02.2013 DE 102013101731
(62) Teilanmeldung aus: 14700924.5
(71) Anmelder: EPCOS AG, 81669 München (DE)
(72) Erfinder: Ihle, Jan, 8071 Grambach (AT); Peschka, Andreas, 14552 Michendorf (DE); Hundertmark, Bert, 14532 Stahnsdorf (DE); Bohl, Benjamin, 10407 Berlin (DE); Ostrick, Bernhard, 14513 Teltow (DE)
(74) Vertreter: Epping - Hermann - Fischer

(57) **Zusammenfassung**

Es wird ein Drucksensorsystem mit einem Drucksensorchip (1) angegeben, der auf einer Montageaufnahme (20) eines keramischen Gehäusekörpers (2) mit einer zum Drucksensorchip geführten Druckzuführung (22)montiert ist, wobei der Gehäusekörper dreidimensional ausgeformt und monolithisch ausgebildet ist und durch ein Keramikmaterial mit einem thermischen Ausdehnungskoeffizienten gebildet wird, der in einem Temperaturbereich von größer oder gleich -40°C und kleiner oder gleich 150°C um weniger als 30% vom thermischen Ausdehnungskoeffizienten des Drucksensorchips abweicht.

## Beschreibung

Es wird ein Drucksensorsystem mit einem Drucksensorchip angegeben.

Ständig steigende Anforderungen an Drucksensoren hinsichtlich der Langzeitbeständigkeit in aggressiven Medien, der Einsatztemperaturen und der Robustheit erfordern besonders resistente Sensorsysteme, möglichst in Verbindung mit einer integrierten Sensorsignalverarbeitung. Gleichzeitig ist es erforderlich, dass solche Systeme durch eine kostengünstige Fertigung herstellbar sind und eine reduzierte Systemkomplexität aufweisen.

Für eine leichte Montage in einer Anwendung, eine ausreichende mechanische Stabilität und zum Schutz des eigentlichen Drucksensorelements gegen äußere Einflüsse sowie zur Vermeidung von Korrosion durch aggressive Medien erfolgt der Einbau von Drucksensorelementen üblicherweise in Gehäusen, die beispielsweise aus Kunststoffen oder aus Materialverbünden von Kunststoff, Keramik, Glas und/oder Metall bestehen. Für den elektrischen Anschluss sind Lötkontakte, Steckkontakte und/oder Leitungszuführungen in den Gehäusen integriert. Geeignete Abdichtungen solcher Systeme erfolgen unter Verwendung von Verschweißungen, Loten, Dichtungen, Vergussmaterialien und/oder Klebstoffen.

Die druckdichte Verbindung eines Drucksensorelements mit dem Druck zuführenden Teil des Gehäuses erfolgt nach dem Stand der Technik vorwiegend über Dichtringe oder organische Klebstoffe wie beispielsweise Polyurethanharze, Silikone, Epoxydharze oder Mischungen aus diesen.

Sensorsysteme mit Kunststoff- oder Metallgehäusen sind aufgrund von Korrosionserscheinungen in aggressiven Medien nur begrenzt einsetzbar. Insbesondere die organischen Klebeverbindungen zwischen den Systemkomponenten stellen eine Schwachstelle in Bezug auf die Langzeitbeständigkeit dar. Kunststoffgehäuse sind darüber hinaus inkompatibel zu alternativen Fügetechnologien wie beispielsweise Verschweißungen und Lötverbindungen. Deshalb bestehen die meisten Sensorsysteme im Stand der Technik aus Materialkombinationen, die wiederum zusätzliche Verbindungen erfordern und die Systeme sehr komplex gestalten.

Zumindest eine Aufgabe von bestimmten Ausführungsformen ist es, ein Drucksensorsystem mit einem Drucksensorchip in einem Gehäuse anzugeben.

Diese Aufgabe wird durch einen Gegenstand gemäß dem unabhängigen Patentanspruch gelöst. Vorteilhafte Ausführungsformen und Weiterbildungen des Gegenstands sind in den abhängigen Ansprüchen gekennzeichnet und gehen weiterhin aus der nachfolgenden Beschreibung und den Zeichnungen hervor.

Gemäß zumindest einer Ausführungsform wird ein Drucksensorsystem, insbesondere ein keramisches gekapseltes Drucksensorsystem, bereitgestellt.

Gemäß zumindest einer Ausführungsform weist ein Drucksensorsystem einen Drucksensorchip auf, der auf einer Montageaufnahme eines keramischen Gehäusekörpers montiert ist. Der Gehäusekörper ist aus einem Keramikmaterial hergestellt, das dreidimensional ausgeformt und monolithisch ausgebildet ist. Insbesondere weist der keramische Gehäusekörper weiterhin eine Druckzuführung auf, die zum Drucksensorchip geführt ist und so den Drucksensorchip mit dem zumessenden Druck verbindet.

Dreidimensional ausgeformt bedeutet hier und im Folgenden, dass der Gehäusekörper nicht durch einen flachen keramischen Träger gebildet wird, also beispielsweise durch ein Keramiksubstrat in Form einer Keramikplatte, sondern eine nicht-ebene dreidimensionale Oberflächentopographie auf der Montageseite aufweist, auf der der Sensorchip montiert ist. Insbesondere weist der Keramikkörper auf der Seite, auf der der Drucksensorchip aufgebracht ist, also auf der Seite mit der Montageaufnahme, eine dreidimensionale Oberflächenstruktur auf, in der beispielsweise die Montageaufnahme als Erhebung oder Vertiefung in einer Montagefläche ausgebildet ist. Monolithisch ausgebildet bedeutet hier und im Folgenden, dass der Gehäusekörper nicht aus einem Verbund mehrerer vorgefertigter Keramikteile hergestellt ist, sondern durch einen einzelnen einstückig ausgebildeten Keramikkörper gebildet wird, der in seiner dreidimensionalen Form an die Anforderungen des Drucksensorsystems angepasst ist. Das kann insbesondere auch bedeuten, dass der Gehäusekörper nicht nur mit einer Montageaufnahme für den Drucksensorchip und mit einer Druckzuführung, sondern auch mit einer oder mehreren weiteren Montageaufnahmen für weitere Drucksensorchips und/oder für andere elektronische Bauteile wie beispielsweise Signalverarbeitungschips und/oder mit mechanischen Befestigungsteilen, wie beispielsweise Erhebungen oder Vertiefungen in Form von Rastnasen oder Verankerungsstrukturen, ausgebildet ist.

Insbesondere ist der Gehäusekörper dasjenige Bauteil des Drucksensorsystems, auf dem der Drucksensorchip sowie gegebenenfalls weitere elektronische Komponenten wie beispielsweise eine Signalverarbeitungselektronik montiert sind. Montiert bedeutet hier und im Folgenden, dass der Drucksensorchip sowie gegebenenfalls weitere elektronische Komponenten direkt, das bedeutet jeweils mittels einem Verbindungsmaterial, auf entsprechend dafür vorgesehenen Montageaufnahmen des Gehäusekörpers befestigt sind. Der Gehäusekörper kann weiterhin das einzige Bauteil und insbesondere das einzige keramische Bauteil des Drucksensorsystems sein, auf dem die elektronischen und elektrischen Komponenten, also beispielsweise Chips, Schaltkreise und elektrische Anschlüsse, montiert bzw. aufgebracht sind.

Der keramische Gehäusekörper bildet ein keramisches Packaging bzw. eine keramische Kapselung für den Drucksensorchip, so dass das hier beschriebene Drucksensorsystem insbesondere auch bei hohen Anwendungstemperaturen und in besonders aggressiven Medien und Gasen einsetzbar sein können.

Mit Hilfe der weiter unten ausführlicher beschriebenen keramischen Spritzgusstechnologie zur Herstellung des Gehäusekörpers können auch sehr komplexe, an kundenspezifische Anforderungen angepasste keramische Gehäusebauformen präzise und reproduzierbar mit einer hohen mechanischen Festigkeit hergestellt werden. Dadurch, dass der Gehäusekörper mit seiner dreidimensionalen Form monolithisch ausgebildet ist, kann weiterhin die Komplexität des Drucksensorsystems reduziert werden. Die Reduzierung der Systemkomplexität aufgrund der monolithischen Ausführung des Gehäusekörpers insbesondere auch durch eine Vereinigung mehrer Systemkomponenten in einem einzigen Bauteil, die im Stand der Technik üblicherweise zu einem Verbund zusammengefügt werden müssen, führt zusätzlich auch zu einer Material- und Kosteneinsparung.

Gemäß einer weiteren Ausführungsform weist das Keramikmaterial des Gehäusekörpers einen thermischen Ausdehnungskoeffizienten auf, der in einem Temperaturbereich von größer oder gleich -40°C und kleiner oder gleich 150°C um weniger als 30 % vom thermischen Ausdehnungskoeffizienten des Drucksensorchips abweicht. Mit anderen Worten ist der thermische Ausdehnungskoeffizient des keramischen Gehäusekörpers an den thermischen Ausdehnungskoeffizienten des Drucksensorchips angepasst. Insbesondere können die thermischen Ausdehnungskoeffizienten des Gehäusekörpers und des Drucksensorchips auch in einem Temperaturbereich von größer oder gleich -50°C und kleiner oder gleich 200°C aneinander angepasst sein und um weniger als 30 % voneinander abweichen. Je kleiner der Unterschied zwischen den thermischen Ausdehnungskoeffizienten des Gehäusekörpers und des Drucksensorchips ist, desto geringere thermomechanische Spannungen können im Drucksensorsystem zwischen dem Drucksensorchip und dem keramischen Gehäusekörper auftreten. Darum kann es besonders vorteilhaft sein, wenn in einem der genannten Temperaturbereiche die thermischen Ausdehnungskoeffizienten um weniger als 20 % und bevorzugt um weniger als 10 % voneinander abweichen.

Das hier beschriebene Drucksensorsystem zeichnet sich somit insbesondere dadurch aus, dass der thermische Ausdehnungskoeffizient des Gehäusekörpers an den thermischen Ausdehnungskoeffizienten des Drucksensorchips angepasst ist. Durch eine geeignete Wahl des keramischen Werkstoffs für den das Packaging bildenden Gehäusekörper ist es möglich, durch Temperaturänderungen auftretenden thermomechanischen Stress zwischen dem Drucksensorchip und dem Gehäusekörper zu reduzieren.

Gemäß einer weiteren Ausführungsform ist der Drucksensorchip als piezoresistiver Silizium-Drucksensor, kapazitiver Keramik-Drucksensor, piezoresistiver dick- oder dünnschichtbasierter Drucksensor auf Basis metallischer oder keramischer Biegeplatten oder als induktiver Drucksensor ausgebildet. Insbesondere kann der Drucksensorchip ein Silizium basierter Drucksensorchip sein.

Durch eine geeignete Wahl des keramischen Materials des Gehäusekörpers mit einem thermischen Ausdehnungskoeffizienten, der im Bereich des Materials des Drucksensorchips, also beispielsweise Silizium, liegt, lassen sich vorteilhafterweise thermisch induzierte mechanische Spannungen, die zu einer Verfälschung des Drucksensorsignals führen können, stark reduzieren oder sogar ganz vermeiden.

Gemäß einer weiteren Ausführungsform weist das Keramikmaterial Mullit, also Aluminiumsilikat, auf. Weiterhin kann es auch möglich sein, dass das Keramikmaterial des Gehäusekörpers Aluminiumoxid, Zirkoniumoxid, Aluminiumnitrid, Siliziumcarbid oder Siliziumnitrid aufweist. Der keramische Gehäusekörper kann auch eine Kombination der genannten Materialien aufweisen. Weiterhin kann der keramische Gehäusekörper auch aus einem oder mehreren der genannten Keramikmaterialien bestehen. Der Vorteil des hier beschriebenen Drucksensorsystems liegt in der monolithischen Ausführung des Gehäusekörpers mit einem geeigneten keramischen Material wie dem vorgenannten. Somit ist im Vergleich zum Stand der Technik eine wesentlich verbesserte Medienbeständigkeit erreichbar.

Gemäß einer weiteren Ausführungsform ist auf einer weiteren Montageaufnahme des Gehäusekörpers ein Signalverarbeitungschip montiert. Jede der Montageaufnahmen des keramischen Gehäusekörpers kann vertieft oder alternativ auch erhöht ausgeführt sein. Der Signalverarbeitungschip kann insbesondere dazu vorgesehen und derart ausgeführt sein, ein elektrisches Signal des Drucksensorchips zu detektieren und weiter zu verarbeiten, sodass über elektrische Anschlüsse des Drucksensorsystems ein Druckmesssignal ausgegeben werden kann. Der Signalverarbeitungschip kann beispielsweise als integrierter Schaltkreis in Form eines einzelnen Chips oder auch in Form von mehreren elektronischen Komponenten, die beispielsweise in Dickschichttechnologie montiert sind, ausgebildet sein. Eine elektrische Verbindung zwischen dem Drucksensorchip und dem Signalverarbeitungschip kann durch Leiterbahnen auf dem und/oder in dem Gehäusekörper und/oder durch Bonddrahtverbindungen gegeben sein.

Gemäß einer weiteren Ausführungsform weist der Gehäusekörper einen Druckanschluss auf, wobei die Druckzuführung vom Druckanschluss bis zum Drucksensorchip reicht. Der Druckanschluss kann zylinderförmig oder kegelförmig sein und weiterhin mit einem Gewinde, einem Bajonettverschlussteil oder einer Verzahnung ausgeführt sein.

Zur Befestigung und Dichtung des Drucksensorchips kann ein Verbindungsmaterial verwendet werden. Insbesondere kann das Verbindungsmaterial eine direkte Montage des Drucksensorchips auf dem Gehäusekörper ermöglichen.

Gemäß einer weiteren Ausführungsform ist der Drucksensorchip mittels eines flexiblen Verbindungsmaterials direkt auf der Montageaufnahme des keramischen Gehäusekörpers montiert. Das flexible Verbindungsmaterial kann insbesondere durch einen Silikonklebstoff gebildet werden.

Gemäß einer weiteren bevorzugten Ausführungsform ist der Drucksensorchip mittels eines starren Verbindungsmaterials direkt auf der Montageaufnahme des keramischen Gehäusekörpers montiert. Das starre Verbindungsmaterial kann beispielsweise durch einen Epoxidharzklebstoff oder besonders bevorzugt durch ein Glaslot oder ein metallisches Lot gebildet werden.

Besonders vorteilhaft erfolgt die Verbindung des Drucksensorchips zum keramischen Gehäusekörper über ein Glaslot oder ein Metalllot. Dadurch können Veränderungen des Drucksignals, der mechanischen Verbindung und der Medienresistenz zwischen dem Drucksensorchip und dem Gehäusekörper, wie sie durch das Alterungsverhalten von Polymeren hervorgerufen werden, vermieden werden. Eine Lotverbindung, insbesondere eine Glaslotverbindung, kann nur eingesetzt werden, wenn für den Drucksensorchip und den keramischen Gehäusekörper Materialien mit ähnlichen thermischen Ausdehnungskoeffizienten verwendet werden, im Falle eines Silizium basierten Sensorchips also für den Gehäusekörper Materialien wie bevorzugt Mullit oder beispielsweise auch Aluminiumnitrid, Siliziumnitrid oder Siliziumcarbid. Nur mit den dadurch erreichbaren sehr ähnlichen thermischen Ausdehnungskoeffizienten der Materialien lassen sich bei einer festen Verbindung wie einer Glaslotverbindung thermisch induzierte Verspannungen im Drucksensorchip, die sich auf das Druckspannungssignal auswirken könnten, vermeiden.

Zur Herstellung des keramischen Gehäusekörpers kann dessen dreidimensionale und monolithische Ausbildung mittels der keramischen Spritzgusstechnologie erfolgen. Mit dieser sind eine Gehäusegestaltung, die je nach Anwendung auch auf Anforderung angepasst werden kann, und insbesondere frei gestaltbare Geometrien des keramischen Gehäusekörpers möglich, beispielsweise zur Ausformung der integrierten einen oder mehreren Montageaufnahmen für den Drucksensorchip und gegebenenfalls für den Signalverarbeitungschip sowie gegebenenfalls des Druckanschlusses. Durch die anpassbare Gehäuseform mit den Kavitäten oder Erhebungen zur Aufnahme der Drucksensor- sowie Auswertechips können unterschiedliche Chips eingesetzt werden. Weiterhin ist auch eine Miniaturisierung des Drucksensorsystems möglich.

Bei der keramischen Spritzgusstechnologie wird ein keramisches Rohmaterial, ein sogenannter keramischer Feedstock, das ein strukturkeramisches Pulver, vorteilhafterweise Mullitpulver, Aluminiumoxidpulver, Zirkoniumoxidpulver, Aluminiumnitridpulver, Siliziumnitridpulver oder Siliziumcarbidpulver, und ein organischen Bindemittel, aufweist oder daraus besteht, in eine entsprechende Form gespritzt. Ein derart hergestellter Grünkörper wird anschließend in einem Entbinderungsprozess, der zweistufig (wässrig, thermisch bzw. katalytisch) oder einstufig (nur thermisch) sein kann, weitgehend vom organischen Anteil befreit. Nachfolgend werden die entbinderten Körper gesintert.

Der Vorteil von keramischen Spritzgusskörpern liegt insbesondere in der sehr präzisen Ausführung der Gehäusedimensionen, die eine einfache und standardisierte Montage ohne zusätzliche Systemelemente bei gleichzeitig geringer Wärmedehnung, einer sehr hohen mechanischen und chemischen Robustheit sowie einer extremen Langzeitstabilität ermöglichen.

Ein über keramische Spritzgusstechnologie hergestellter keramischer Körper wird zur Ausbildung des fertigen keramischen Gehäusekörpers bei einem geeigneten Temperaturprofil und in einer geeigneten Atmosphäre gesintert, im Falle von Mullit je nach Reinheit bzw. Sinteradditivanteil beispielsweise bei 1500°C bis 1750°C und bevorzugt bei 1600°C bis 1750°C in Luft.

Gemäß einer weitern Ausführungsform weist das Drucksensorsystem elektrische Anschlüsse zum elektrischen Anschluss zumindest des Drucksensorchips auf. Weiterhin können die elektrischen Anschlüsse den externen Anschluss des Drucksensorsystems bilden. Die elektrischen Anschlüsse können auf dem und/oder im keramischen Gehäusekörper ausgebildet sein und eines oder mehrere der folgenden Elemente aufweisen: Leiterbahnen, Verdrahtungsträger, metallische Vias, Bonddrähte.

Die elektrischen Anschlüsse können beispielsweise Leiterbahnen aufweisen oder daraus bestehen, die direkt auf dem keramischen Gehäusekörper mittels Metallisierungsverfahren wie beispielsweise Dick- oder Dünnschichttechnik aufgebracht sind. Vorteilhafterweise ist die Montageseite des Gehäusekörpers, auf der sich die Montageaufnahme für den Drucksensorchip befindet, bereichsweise ebenflächig ausgeführt, so dass mittels kostengünstiger Siebdrucktechnik oder Sputtertechnologie Leiterbahnen abgeschieden werden können. Weiterhin ist auch eine dreidimensionale Ausführung der Leiterbahnen beispielsweise mittels Tampondruck oder Dispensen möglich.

Weiterhin können Teile der elektrischen Anschlüsse durch das keramische Gehäuse in Form von Vias hindurchgeführt sein, um beidseitig angebrachte Leiterbahnen miteinander elektrisch zu verbinden.

Weiterhin können die elektrischen Anschlüsse einen Verdrahtungsträger aufweisen oder als ein solcher ausgeführt sein oder eine Kombination einer direkt aufgebrachten Dick- oder Dünnschichtmetallisierung mit einem Verdrahtungsträger aufweisen oder daraus bestehen. Der Verdrahtungsträger kann beispielsweise über Lötverbindungen von extern elektrisch kontaktiert werden.

Der Verdrahtungsträger kann eine starre oder flexible Leiterplatte, ein Stanzgitter ("lead frame") oder ein zumindest teilweise mit Kunststoff umhülltes Stanzgitter sein. Eine direkte Montage des Verdrahtungsträgers am keramischen Grundkörper kann beispielsweise durch Einrasten, Verpressen oder Klemmen in entsprechende Strukturen im Grundkörper erfolgen. Weiterhin kann auch eine Befestigung des Verdrahtungsträgers über direktes Löten, beispielsweise Weichlöten, Hartlöten, Glaslöten, Aktivlöten, oder Kleben auf den Grundkörper und/oder auf Leiterbahnen erfolgen.

Der Drucksensorchip kann an den elektrischen Anschlüssen und/oder an einem Signalverarbeitungschip beispielsweise mittels Bonddrähten oder durch eine direkte Montage auf Leiterbahnen elektrisch angeschlossen sein.

Gemäß einer weiteren Ausführungsform weist das Drucksensorsystem einen Deckel auf, der auf dem Gehäusekörper über dem Drucksensorchip befestigt ist. Durch den Deckel kann die Montageseite des Gehäusekörpers, also die Seite mit dem Drucksensorchip, verschlossen bzw. verkapselt werden. Der Deckel kann beispielsweise Kunststoff, Metall oder ein Keramikmaterial aufweisen oder daraus sein.

Gemäß einer weiteren Ausführungsform weist ein Verdrahtungsträger, der zumindest einen Teil der elektrischen Anschlüsse bilden kann, Aussparungen auf, durch die Teile des Gehäusekörpers und/oder des Deckels eingreifen oder hindurch greifen, um den Verdrahtungsträger zu arretieren bzw. zu befestigen.

Gemäß einer weiteren Ausführungsform weist der Gehäusekörper Aussparungen auf, in die entsprechende Teile des Deckels und/oder eines Verdrahtungsträgers, der zumindest einen Teil der elektrischen Anschlüsse bildet, eingreifen oder hindurch greifen, so dass eine mechanische Arretierung zur Befestigung des Deckels und/oder des Verdrahtungsträgers gebildet wird.

Der Deckel kann alternativ auch auf dem Gehäusekörper aufgeklebt oder aufgelötet sein.

Gemäß einer weiteren Ausführungsform ist der Drucksensorchip und/oder ein Signalverarbeitungschip zumindest teilweise mit einem Polymerverguss bedeckt. Insbesondere kann der Drucksensorchip mittels Bonddrahtverbindungen elektrisch kontaktiert sein, die mit dem Polymerverguss bedeckt sind.

Der Polymerverguss kann zusätzlich oder alternativ auch Teile des Gehäusekörpers oder der elektrischen Anschlüsse bedecken. Insbesondere kann der Polymerverguss einen Schutz der bedeckten Teile und Komponenten gegenüber der Umgebung bilden. Hierzu kann der Polymerverguss eine Abdeckung bilden, die zumindest einen Teil einer Außenseite des Drucksensorsystems bildet. Alternativ hierzu kann der Polymerverguss auch unter einem Deckel angeordnet sein. Der Polymerverguss kann dabei weiterhin beispielsweise vom Deckel beabstandet angeordnet sein. Beispielsweise kann der Deckel eine Vertiefung aufweisen, in der der Drucksensorchip angeordnet ist, wobei der Polymerverguss in diesem Fall die Vertiefung des Deckels nicht ganz ausfüllt.

Gemäß einer weiteren Ausführungsform weist das Drucksensorsystem eine Mehrzahl von Drucksensorchips auf Montageaufnahmen des keramischen Gehäusekörpers auf. Alternativ oder zusätzlich können auch mehrere Signalverarbeitungschips vorgesehen sein.

Gemäß einer bevorzugten Ausführungsform weist das Drucksensorsystem die folgenden Komponenten auf:
- mindestens ein Drucksensorchip,
- ein keramischer Gehäusekörper, der in monolithischer Ausführung ausgebildet ist und der mindestens eine Montageaufnahme für den mindestens einen Drucksensorchip sowie eine Druckzuführung aufweist, wobei der mindestens eine Drucksensorchip direkt mit dem keramischen Gehäusekörper verbunden ist, und
- elektrische Anschlüsse.

In weiteren bevorzugten Ausführungsformen weist das Drucksensorsystem zusätzlich eines oder mehrere der folgenden Komponenten auf:
- mindestens ein Signalverarbeitungschip, der auf mindestens einer Montageaufnahme des Gehäusekörpers angeordnet ist und der bevorzugt direkt mit dem Gehäusekörper verbunden ist,
- ein Druckanschluss und
- ein Deckel.

Weitere bevorzugte Ausführungsformen weisen Kombinationen von Komponenten und Eigenschaften gemäß der folgenden Aspekte auf:
Aspekt 1: Drucksensorsystem mit einem Drucksensorchip, der auf einer Montageaufnahme eines keramischen Gehäusekörpers mit einer zum Drucksensorchip geführten Druckzuführung montiert ist, wobei der Gehäusekörper dreidimensional ausgeformt und monolithisch ausgebildet ist und durch ein Keramikmaterial mit einem thermischen Ausdehnungskoeffizienten gebildet wird, der in einem Temperaturbereich von größer oder gleich -40°C und kleiner oder gleich 150°C um weniger als 30% vom thermischen Ausdehnungskoeffizienten des Drucksensorchips abweicht.
Aspekt 2: Drucksensorsystem nach Anspekt 1, wobei der Drucksensorchip auf Silizium basiert.
Aspekt 3: Drucksensorsystem nach Aspekt 1 oder 2, wobei das Keramikmaterial Mullit aufweist.
Aspekt 4: Drucksensorsystem nach einem der Aspekte 1 bis 3, wobei das Keramikmaterial Aluminiumoxid, Zirkoniumoxid, Aluminiumnitrid, Siliziumcarbid und/oder Siliziumnitrid aufweist.
Aspekt 5: Drucksensorsystem nach einem der Aspekte 1 bis 4, das Keramikmaterial aus einem oder mehreren ausgewählt aus Mullit, Aluminiumnitrid, Siliziumcarbid und/oder Siliziumnitrid besteht.
Aspekt 6: Sensorsystem nach einem der Aspekte 1 bis 5, wobei die thermischen Ausdehnungskoeffizienten des Gehäusekörpers und des Drucksensorchips in einem Temperaturbereich von größer oder gleich -50°C und kleiner oder gleich 200°C um weniger als 30%, bevorzugt um weniger als 20% und besonders bevorzugt um weniger als 10% voneinander abweichen.
Aspekt 7: Drucksensorsystem nach einem der Aspekte 1 bis 6, wobei der Gehäusekörper eine nicht-ebene dreidimensionale Oberflächentopographie auf der Montageseite aufweist und die Montageaufnahme durch eine Erhöhung oder eine Vertiefung des Gehäusekörpers gebildet wird und die Druckzuführung in die Montageaufnahme mündet.
Aspekt 8: Drucksensorsystem nach einem der Aspekte 1 bis 7, wobei der Gehäusekörper einen Druckanschluss aufweist und die Druckzuführung von Druckanschluss bis zum Drucksensorchip reicht.
Aspekt 9: Drucksensorsystem nach einem der Aspekte 1 bis 8, wobei auf einer weiteren Montageaufnahme des Gehäusekörpers ein Signalverarbeitungschip montiert ist.
Aspekt 10: Drucksensorsystem nach einem der Aspekte 1 bis 9, wobei der Drucksensorchip mittels eines starren
Verbindungsmaterials direkt auf der Montageaufnahme montiert ist, das durch ein Glaslot, ein metallisches Lot oder einen Epoxidharzklebstoff gebildet wird.
Aspekt 11: Drucksensorsystem nach einem der Aspekte 1 bis 10, wobei der Gehäusekörper mittels eines keramischen Spritzgussverfahrens dreidimensional ausgeformt und monolithisch ausgebildet ist.
Aspekt 12: Drucksensorsystem nach einem der Aspekte 1 bis 11, wobei das Drucksensorsystem elektrische Anschlüsse auf dem Gehäusekörper zum elektrischen Anschluss zumindest des Drucksensorchips aufweist, die eines oder mehrere der folgenden Elemente aufweisen: Verdrahtungsträger, Leiterbahnen, Bonddrähte.
Aspekt 13: Drucksensorsystem nach einem der Aspekte 1 bis 12, wobei der Drucksensorchip mittels Bonddrahtverbindungen elektrisch kontaktiert ist, die mit einem Polymerverguss bedeckt sind.
Aspekt 14: Drucksensorsystem nach einem der Aspekte 1 bis 13, wobei das Drucksensorsystem einen Deckel aufweist, der auf dem Gehäusekörper über dem Drucksensorchip befestigt ist.
Aspekt 15: Drucksensorsystem nach Aspekt 14, wobei der Deckel auf dem Gehäusekörper durch eine mechanische Arretierung befestigt ist.

Weitere Vorteile, vorteilhafte Ausführungsformen und Weiterbildungen ergeben sich aus den im Folgenden in Verbindung mit den Figuren beschriebenen Ausführungsbeispielen.

Es zeigen:
- Figur 1: eine schematische Darstellung eines Drucksensorsystems gemäß einem Ausführungsbeispiel,
- Figuren 2A bis 2G: schematische Darstellungen von verschiedenen Ansichten eines Drucksensorsystems gemäß einem weiteren Ausführungsbeispiel und
- Figuren 3A bis 3F: schematische Darstellungen von verschiedenen Ansichten eines Drucksensorsystems gemäß einem weiteren Ausführungsbeispiel.

In den Ausführungsbeispielen und Figuren können gleiche, gleichartige oder gleich wirkende Elemente jeweils mit denselben Bezugszeichen versehen sein. Die dargestellten Elemente und deren Größenverhältnisse untereinander sind nicht als maßstabsgerecht anzusehen, vielmehr können einzelne Elemente, wie zum Beispiel Schichten, Bauteile, Bauelemente und Bereiche, zur besseren Darstellbarkeit und/oder zum besseren Verständnis übertrieben groß dargestellt sein.

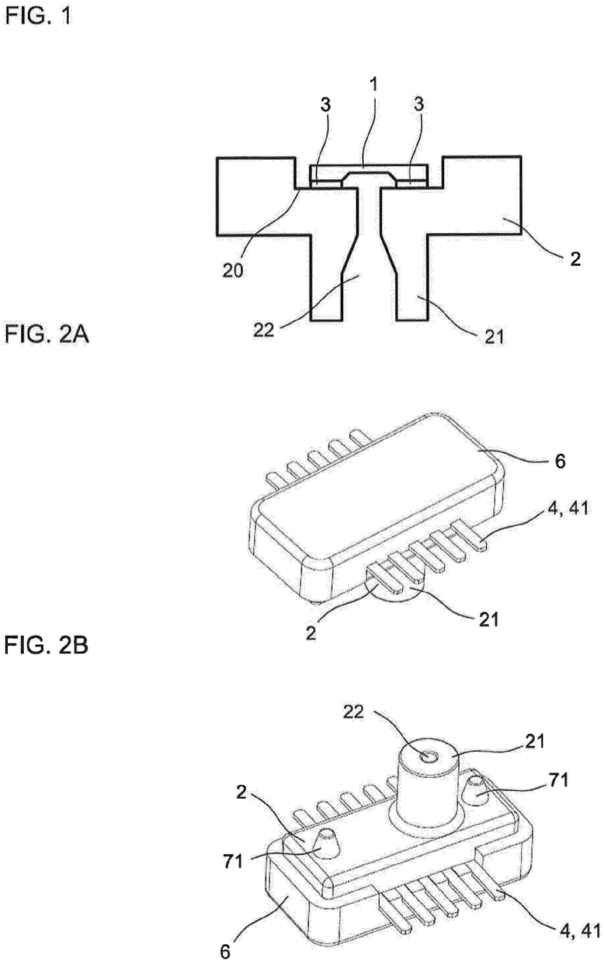

In Figur 1 ist ein Drucksensorsystem gemäß einem Ausführungsbeispiel gezeigt, das einen Drucksensorchip 1 aufweist, der auf einer Montageaufnahme 20 eines keramischen Gehäusekörpers 2 montiert ist. Die Montageaufnahme 20 ist durch eine Vertiefung des Gehäusekörpers 2 auf einer Montageseite des Gehäusekörpers 2 gebildet. Alternativ dazu kann die Montageaufnahme 20 beispielsweise auch als Erhebung anstelle einer Vertiefung ausgebildet sein.

Weiterhin weist der Gehäusekörper 2 eine Druckzuführung 22 auf, über die der zumessende Druck dem Drucksensorchip 1 zugeführt werden kann. Die Druckzuführung 22 reicht dazu bis zur Montageaufnahme 20. Zum Anschluss des Drucksensorsystems kann ein Druckanschluss 21 vorgesehen sein, wie in Figur 1 gezeigt ist, der zylinder- oder kegelförmig ausgebildet sein kann und beispielsweise ein Gewinde, einen Teil eines Bajonettverschlusses oder eine Verzahnung aufweisen kann.

Die Montage des Drucksensorchips 1 auf der Montageaufnahme 20 des keramischen Gehäusekörpers 2 sowie gleichzeitig die Abdichtung des Drucksensorchips 1 erfolgt durch ein Verbindungsmaterial 3, sodass der Drucksensorchip 1 direkt auf dem Gehäusekörper 2 montiert ist.

Der Drucksensorchip 1 kann beispielsweise als siliziumbasierter Drucksensorchip ausgebildet sein, etwa also piezoresistiver Silizium-Drucksensor. Weitehrin kann der Drucksensorchip 1 auch als kapazitiver Keramik-Drucksensor, piezoresistiver dick- oder dünnschichtbasierter Drucksensor auf Basis metallischer oder keramischer Biegeplatten oder als induktiver Drucksensor ausgebildet sein.

Der Gehäusekörper 2 ist dreidimensional ausgeformt und ist monolithisch ausgebildet. Insbesondere wird zur Herstellung des keramischen Gehäusekörpers 2 ein Grünkörper hergestellt, der bereits die Form des endgültigen Gehäusekörpers 2 aufweist und der in dieser Form je nach Material getrocknet und/oder entbindert sowie gesintert wird.

Die Herstellung des Gehäusekörpers 2 erfolgt mittels keramischer Spritzgusstechnologie, wie im allgemeinen Teil beschrieben ist, wodurch frei gestaltbare Geometrien und beispielsweise eine gezielte Ausbildung der integrierten Montageaufnahme 20 für den Drucksensorchip 1 möglich ist. Die Form des Gehäusekörpers 2 gemäß der Darstellung in Figur 1 ist rein exemplarisch zu verstehen und kann weitere geometrische Merkmale und Oberflächenstrukturen oder Formen aufweisen, die beispielsweise zur Aufnahme weiterer elektronischer Bauteile, elektrischer Kontakte, eines Deckels oder zur Montage des Drucksensorsystems vorgesehen sein können.

Wird beispielsweise Mullit als Keramikmaterial für den keramischen Gehäusekörper 2 verwendet, kann der mittels Spritzgusstechnologie hergestellte Grünkörper je nach Reinheit und je nach Sinteradditivanteil beispielsweise in einem Temperaturbereich von 1500°C bis 1750°C in Luft gesintert werden.

Insbesondere weist der keramische Gehäusekörper 2 ein Keramikmaterial auf, das einen thermischen Ausdehnungskoeffizienten aufweist, der an den thermischen Ausdehnungskoeffizienten des Drucksensorchips 1 angepasst ist. Das bedeutet insbesondere, dass die thermischen Ausdehnungskoeffizienten des Drucksensorchips 1 und des Gehäusekörpers 2 um weniger als 30 %, bevorzugt um weniger als 20 % und besonders bevorzugt um weniger als 10 % voneinander abweichen. Insbesondere können die Ausdehnungskoeffizienten in einem Temperaturbereich von größer oder gleich -40°C und kleiner oder gleich 150°C und bevorzugt in einem Temperaturbereich von größer oder gleich -50°C und kleiner oder gleich 200°C aneinander angepasst sein. Hierdurch kann sichergestellt werden, dass bei typischen Betriebstemperaturen des Drucksensorsystems die thermischen Ausdehnungskoeffizienten des Drucksensorchips 1 und des Gehäusekörpers 2 möglichst wenig voneinander abweichen.

Als besonders vorteilhaft hat sich als Keramikmaterial für den keramischen Gehäusekörper 2 Mullit, also Aluminiumsilikat, erwiesen. Alternativ hierzu kann das Keramikmaterial des Gehäusekörpers 2 auch Aluminiumoxid, Zirkoniumoxid, Aluminiumnitrid, Siliziumcarbid oder Siliziumnitrid aufweisen oder aus einem oder mehreren der genannten Keramikmaterialien bestehen. Durch eine geeignete Wahl des Keramikmaterials mit einem thermischen Ausdehnungskoeffizienten, der im Bereich des Drucksensorchips 1, also beispielsweise im Bereich von Silizium, das als grundlegendes Chipmaterial des Sensorchips 1 verwendet werden kann, liegt, lassen sich vorteilhafterweise thermisch induzierte mechanische Spannungen, die zu einer Verfälschung des Drucksignals führen könnten, deutlich reduzieren oder sogar ganz vermeiden. Durch die monolithische Ausführung des Gehäusekörpers 2, der im Vergleich zum Stand der Technik eine Vereinigung mehrerer Systemkomponenten in einem einzigen Bauteil darstellt, kann die Systemkomplexität des Drucksensorsystems deutlich reduziert werden, was im Vergleich zum Stand der Technik zu einer Material- und Kosteneinsparung führt. Weiterhin ist eine sehr hohe Medienresistenz auch bei hohen Temperaturen und sehr aggressiven Medien möglich.

Durch die Anpassung der thermischen Ausdehnungskoeffizienten des Drucksensorchips 1 und des Gehäusekörpers 2 aneinander kann besonders bevorzugt ein starres Verbindungsmaterial 3, beispielsweise ein Epoxidharzklebstoff, ein Glaslot oder ein metallisches Lot, verwendet werden. Besonders vorteilhaft ist die Verbindung des Drucksensorchips 1 zum keramischen Gehäusekörper 2 mittels eines Glaslots oder eines metallischen Lots. Derartige Verbindungsmaterialien weisen im Gegensatz zu Polymeren kein für diese typisches Alterungsverhalten auf, wodurch Veränderungen des Drucksignals und der mechanischen Verbindung vermieden werden können. Da die thermischen Ausdehnungskoeffizienten des Drucksensorchips 1 und des Gehäusekörpers 2 aneinander angepasst sind, kann trotz einer festen direkten Verbindung zwischen dem Drucksensorchip 1 und dem Gehäusekörper 2 durch das Verbindungsmaterial 3 die Ausbildung thermisch induzierter Verspannungen im Sensorchip 1, die sich auf das Drucksignal auswirken könnten, vermieden werden.

Mittels der keramischen Spritzgusstechnologie kann eine sehr präzise Ausführung der Gehäusedimensionen erreicht werden. Hierdurch ist eine einfache und standardisierte Montage des Drucksensorchips 1 ohne zusätzliche Systemelemente möglich, während gleichzeitig eine geringe thermische Verspannung, eine sehr hohe mechanische und chemische Robustheit sowie eine extreme Langzeitstabilität erreicht werden kann. In den folgenden Figuren sind weitere Ausführungsbeispiele für Drucksensorsysteme gezeigt, die Weiterbildungen und Modifikationen des Drucksensorsystems gemäß dem Ausführungsbeispiel in Figur 1 zeigen. Die nachfolgende Beschreibung beschränkt sich daher hauptsächlich auf die Unterschiede zum bisher beschriebenen Ausführungsbeispiel.

In Verbindung mit den Figuren 2A bis 2G sind verschiedene Ansichten eines weiteren Ausführungsbeispiels für ein Drucksensorsystem gezeigt, das zusätzlich zum Drucksensorchip 1 auf dem Gehäusekörper 2 einen Signalverarbeitungschip 7 auf einer weiteren Montageaufnahme 20 des keramischen Gehäusekörpers 2 aufweist, wobei die Montageaufnahme 20 für den Drucksensorchip 1 und den Signalverarbeitungschip 7 jeweils durch Vertiefungen gebildet sind. Alternativ hierzu kann das Drucksensorsystem auch eine Mehrzahl von Drucksensorchips 1 und/oder von Signalverarbeitungschips 7 aufweisen. Der Drucksensorchip 1 und der Signalverarbeitungschip 7 sind jeweils mittels eines in den nachfolgenden Figuren der Übersichtlichkeit halber nicht gezeigten Verbindungsmaterials, wie in Verbindung mit der Figur 1 und im allgemeinen Teil beschrieben ist, direkt auf dem Gehäusekörper 2 montiert.

Weiterhin weist das in Verbindung mit den Figuren 2A bis 2G gezeigte Drucksensorsystem elektrische Anschlüsse 4, einen Polymerverguss 5 sowie einen Deckel 6 auf.

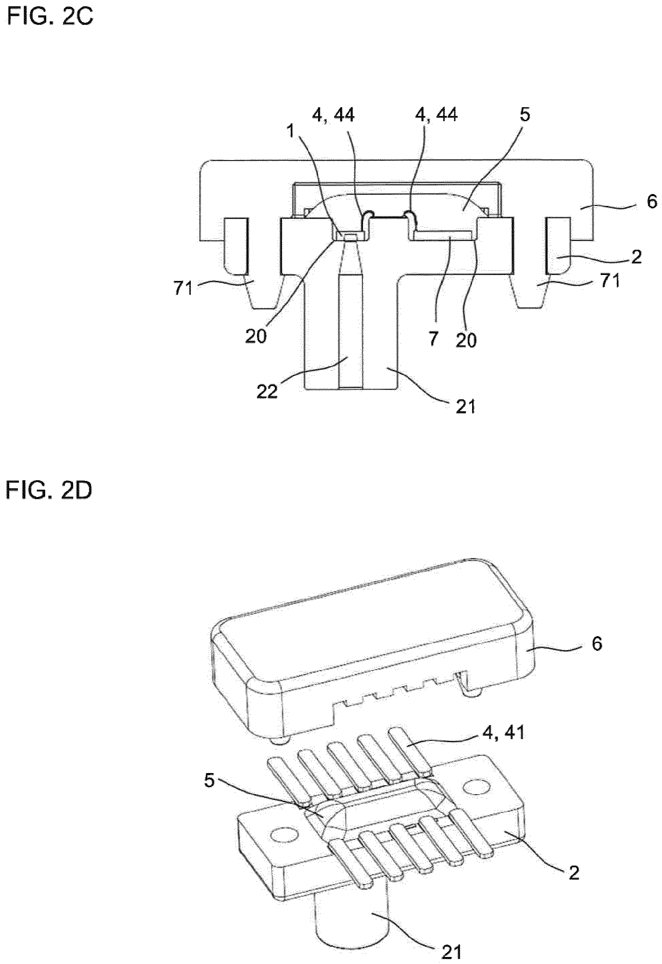

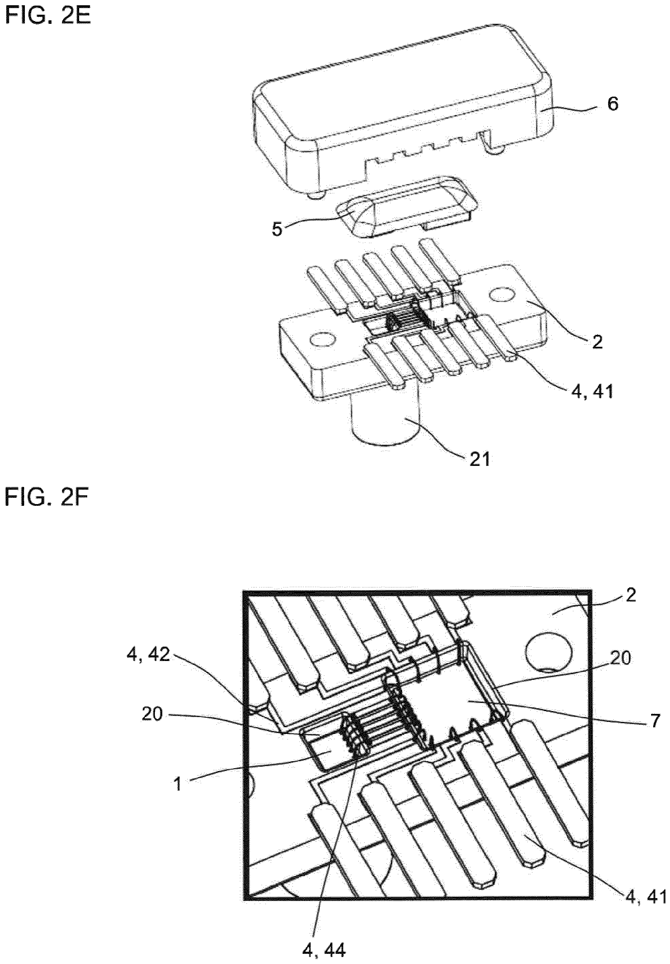

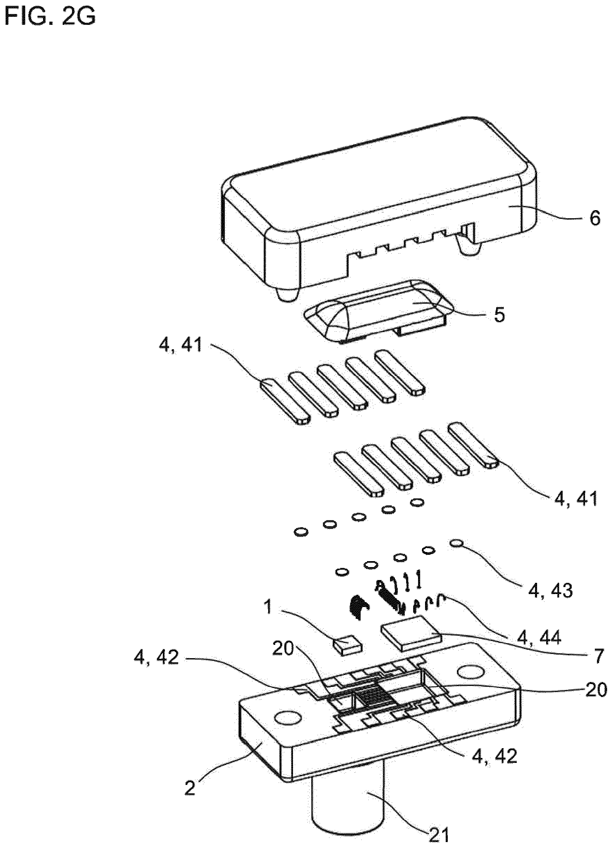

Die Figuren 2A und 2B zeigen das Drucksensorsystem in einem mittels des Deckels 6 verschlossenen Zustand von der Ober- und der Unterseite, während die Figur 2C eine Schnittdarstellung durch das Drucksensorsystem zeigt. In den Figuren 2D und 2E ist das Drucksensorsystem zur besseren Veranschaulichung mit geöffnetem Deckel 6 dargestellt, wobei in Figur 2E zusätzlich der Polymerverguss 5 abgehoben ist. Die Figur 2F zeigt eine Detailansicht eines derartig geöffneten Drucksensorsystems, während in Figur 2G eine Explosionsdarstellung des Drucksensorsystems dargestellt ist.

Als elektrische Anschlüsse 4 weist das Drucksensorsystem Teile eines Verdrahtungsträgers 41, Leiterbahnen 42, Lotverbindungen 43 und Bonddrähte 44 auf. Über die elektrischen Anschlüsse 4 kann der Drucksensorchip 1 mit dem Signalverarbeitungschip 7 elektrisch leitend verbunden werden und es kann weiterhin ein externer elektrischer Anschluss des Drucksensorsystems bereitgestellt werden.

Die Leiterbahnen 42 können beispielsweise auf dem keramischen Gehäusekörper 2 mittels Metallisierungsverfahren wie beispielsweise Dick- oder Dünnschichttechnik aufgebracht werden. Vorteilhafterweise ist die Montageseite des Gehäusekörpers 2 hierzu zumindest bereichsweise ebenflächig ausgeführt, sodass die Leiterbahnen 42 mittels kostengünstiger Siebdrucktechnik oder Sputtertechnologie abgeschieden werden können. Alternativ hierzu kann bei einer entsprechenden Oberflächentopographie des Gehäusekörpers 2 auch eine dreidimensionale Ausbildung von Leiterbahnen beispielsweise mittels Tampondruck oder Dispensen erfolgen.

Mittels den Bonddrähten 44 sind der Drucksensorchip 1 und der Signalverarbeitungschip 7 an Leiterbahnen 42 elektrisch angeschlossen. Zur externen Kontaktierung des Drucksensorsystems ist der Verdrahtungsträger 41 vorgesehen, dessen Teile mittels Lotverbindungen 43 auf entsprechenden Kontaktstellen der Leiterbahnen 42 aufgelötet sind und der aus dem mittels des Deckels 6 verschlossenen Gehäusekörpers 2 herausragt, sodass das Drucksensorsystem durch Verlöten der Verdrahtungsträgers 41 elektrisch angeschlossen werden kann. Der Verdrahtungsträger 41 kann beispielsweise eine starre oder flexible Leiterplatte, ein Stanzgitter, also ein so genanntes Leadframe, oder ein zumindest teilweise mit Kunststoff umhülltes Stanzgitter sein.

Alternativ zu einem Löten, beispielsweise Weichlöten, Hartlöten, Glaslöten oder Aktivlöten, mittels dem der Verdrahtungsträger 41 auf den Leiterbahnen 42 und weiterhin beispielsweise auch auf Teilen des Gehäusekörpers 2 befestigt werden kann, kann der Verdrahtungsträger 41 auch mittels Kleben befestigt werden. Weiterhin kann eine direkte Montage des Verdrahtungsträgers 41 am keramischen Gehäusekörper 2 mittels Einrasten, Verpressen oder Klemmen in entsprechende Strukturen des Keramikkörpers 2 erfolgen. Solche Strukturen können mit dem oben beschriebenen Verfahren zusammen mit den anderen dreidimensionalen Gehäusemerkmalen des Gehäusekörpers hergestellt werden. Beispielsweise ist es auch möglich, dass der Verdrahtungsträger 41 Aussparungen aufweist, durch die Teile des Keramikkörpers 2 und/oder des Deckels 6 hindurch greifen, um den Verdrahtungsträger 41 zu arretieren beziehungsweise zu befestigen.

Der Deckel 6 dient zum Verschluss der Montageseite des keramischen Grundkörpers 2, auf der der Drucksensorchip 1 angeordnet ist. Der Deckel 6 kann beispielsweise aus Kunststoff, Metall oder einer Keramik bestehen oder zumindest eines oder mehrere der genannten Materialien aufweisen. Im gezeigten Ausführungsbeispiel ist der Deckel 6 insbesondere aus einem Kunststoffmaterial hergestellt. Zur Befestigung des Deckels 6 auf dem Gehäusekörper 2 weist der Gehäusekörper 2 Aussparungen auf, durch die Teile des Deckels 6 in Form von Rastnasen oder Verzahnungen hindurch greifen, sodass eine mechanische Arretierung 71 des Deckels 6 auf dem Gehäusekörper 2 gebildet wird.

Der Deckel 6 weist eine Vertiefung auf, die sich über die Montageseite des Gehäusekörpers 2 erstreckt. In der Vertiefung des Deckels 6 ist zumindest auf Teilen des Drucksensorchips 1 und/oder der elektrischen Anschlüsse 4 und/oder des Signalverarbeitungschips 7 und/oder des Gehäusekörpers 2 ein Polymerverguss 5 angeordnet, der zum Schutz oder zur Stabilisierung der bedeckten Flächen oder Elemente dienen kann. Wie in Figur 2C gezeigt ist, kann der Polymerverguss 5 dabei vom Deckel 6 beabstandet angeordnet sein, sodass die Vertiefung des Deckels 6 nicht gänzlich mit dem Polymer gefüllt ist. Insbesondere die Bonddrahtverbindungen können mit einem Polymer zur Stabilisierung dieser bedeckt sein.

Alternativ zum gezeigten Ausführungsbeispiel kann das Drucksensorsystem auch nur einen Polymerverguss 5 und keinen Deckel aufweisen. In diesem Fall kann der Polymerverguss 5 einen Schutz der bedeckten Teile und Komponenten gegenüber der Umgebung bilden. Hierzu kann der Polymerverguss 5 eine Abdeckung bilden, die zumindest einen Teil einer Außenseite des Drucksensorsystems bildet.

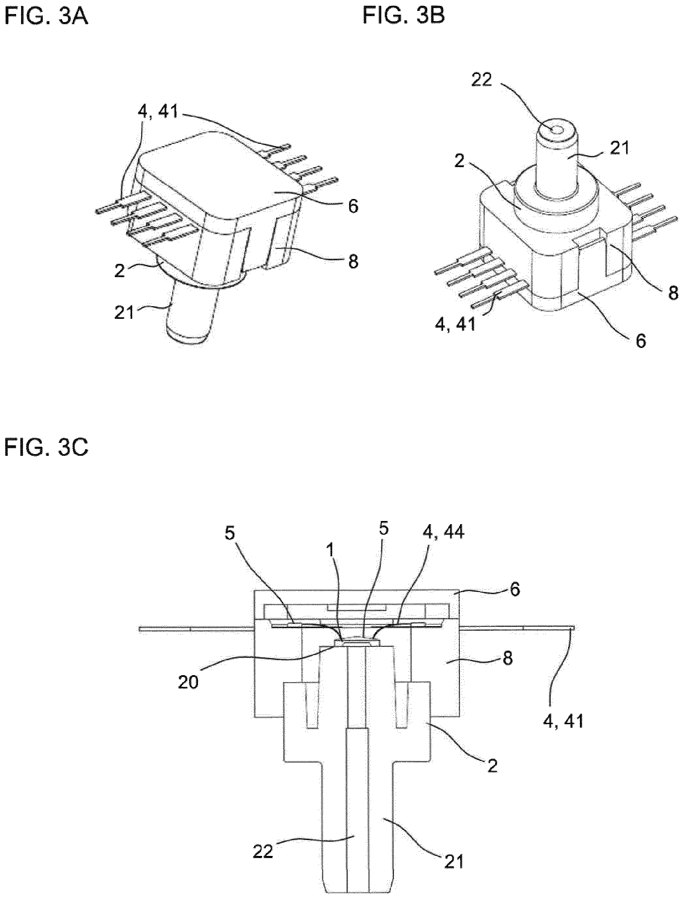

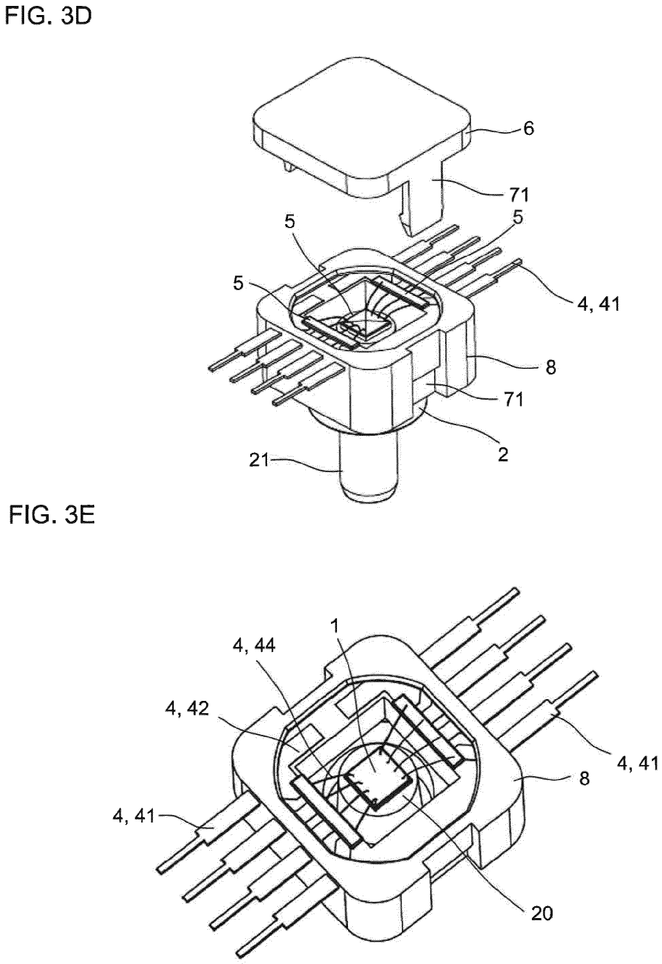

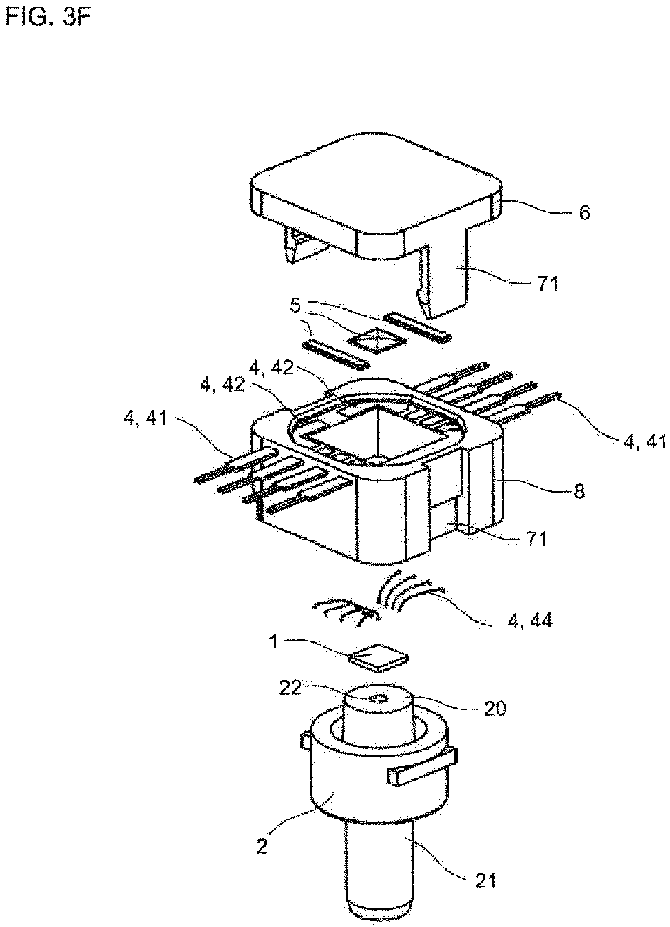

In Verbindung mit den Figuren 3A bis 3F ist ein weiteres Ausführungsbeispiel für ein Drucksensorsystem gezeigt, das eine Modifikation des vorherigen Ausführungsbeispiels darstellt. In den Figuren 3A und 3B sind wiederum Ansichten der Ober- und der Unterseite des Drucksensorsystems gezeigt, während die Figur 3C eine Schnittdarstellung durch das Drucksensorsystem ist. In Figur 3D ist das Drucksensorsystem mit geöffnetem Deckel 6 gezeigt, während in Figur 3E eine Detailansicht des geöffneten Drucksensorsystems mit entferntem Polymerverguss 5 gezeigt ist. Figur 3F zeigt eine Explosionsdarstellung des Drucksensorsystems.

Im Vergleich zum vorherigen Ausführungsbeispiel weist das Drucksensorsystem gemäß dem Ausführungsbeispiel der Figuren 3A bis 3F einen Gehäusekörper 2 mit einer Montageaufnahme 20 auf, die als Erhebungen ausgebildet sind. Auf der Montageaufnahme 20 ist ein Drucksensorchip 1 angeordnet, der über Bonddrähte 44 an Leiterbahnen 42 angeschlossen sind, die wiederum mit einem Verdrahtungsträger 41 zur Außenkontaktierung verbunden sind. Zum Schutz der Bondverbindungen auf dem Chip 1 und den Leiterbahnen 42 sind diese jeweils mit einem eigenen Polymerverguss 5 bedeckt.

Im Vergleich zum vorherigen Ausführungsbeispiel sind der Verdrahtungsträger 41 und die Leiterbahnen 42 auf sowie teilweise in einem Kunststoffgehäuse 8 angeordnet, das am Gehäusekörper 2 durch eine mechanische Arretierung oder durch Kleben befestigt ist. Der Deckel 6 ist mit einer mechanischen Arretierung 71 in Form von Verzahnungen am Kunststoffgehäuse 8 befestigt, das entsprechende Aussparungen aufweist. Alternativ hierzu kann der Deckel 6 beispielsweise auch mittels eines Klebstoffs auf dem Kunststoffgehäuse 8 befestigt werden. Das Kunststoffgehäuse 8 dient der Halterung der elektrischen Anschlüsse 4, während der monolithisch ausgebildete Gehäusekörper 2 zusammen mit dem direkt montierten Drucksensorchip 1 den zur Druckmessung vorgesehenen Teil des Drucksensorsystems bildet.

Die in den Figuren gezeigten Ausführungsbeispiele des Drucksensorsystems sind nicht auf die gezeigten Merkmale beschränkt und können weitere oder alternative Merkmale gemäß den Ausführungsformen im allgemeinen Teil aufweisen.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

### Bezugszeichenliste

- 1: Drucksensorchip
- 2: Gehäusekörper
- 3: Verbindungsmaterial
- 4: elektrischer Anschluss
- 5: Polymerverguss
- 6: Deckel
- 7: Signalverarbeitungschip
- 8: Kunststoffgehäuse
- 20: Montageaufnahme
- 21: Druckanschluss
- 22: Druckzuführung
- 41: Verdrahtungsträger
- 42: Leiterbahn
- 43: Lotverbindung
- 44: Bonddraht
- 71: mechanische Arretierung

## Patentansprüche

1. Drucksensorsystem mit einem Drucksensorchip (1), der auf einer Montageaufnahme (20) eines keramischen Gehäusekörpers (2) mit einem Druckanschluss (21) und mit einer vom Druckanschluss (21) zum Drucksensorchip (1) geführten Druckzuführung (22) montiert ist, wobei der Gehäusekörper (2) dreidimensional ausgeformt und monolithisch ausgebildet ist und durch ein Keramikmaterial mit einem thermischen Ausdehnungskoeffizienten gebildet wird, der in einem Temperaturbereich von größer oder gleich -40°C und kleiner oder gleich 150°C um weniger als 30% vom thermischen Ausdehnungskoeffizienten des Drucksensorchips (1) abweicht,
wobei der Druckanschluss (21) zylinder- oder kegelförmig ausgebildet ist,
wobei sich die Druckzuführung (22) zum Drucksensorchip (1) hin verjüngt und hinterschneidungsfrei zum Drucksensorchip (1) führt.

2. Drucksensorsystem nach Anspruch 1, wobei der Druckanschluss (21) einen runden Querschnitt aufweist.

3. Drucksensorsystem nach Anspruch 1 oder 2, wobei der Druckanschluss (21) eine um die Druckzuführung (22) umlaufende, dem Drucksensorchip (1) zugewandte Rille aufweist.

4. Drucksensorsystem nach einem der vorherigen Ansprüche, wobei der Drucksensorchip (1) auf Silizium basiert.

5. Drucksensorsystem nach einem der vorherigen Ansprüche, wobei das Keramikmaterial Mullit aufweist.

6. Drucksensorsystem nach einem der vorherigen Ansprüche, wobei das Keramikmaterial Aluminiumoxid, Zirkoniumoxid, Aluminiumnitrid, Siliziumcarbid und/oder Siliziumnitrid aufweist.

7. Drucksensorsystem nach einem der vorherigen Ansprüche, das Keramikmaterial aus einem oder mehreren ausgewählt aus Mullit, Aluminiumnitrid, Siliziumcarbid und/oder Siliziumnitrid besteht.

8. Sensorsystem nach einem der vorherigen Ansprüche, wobei die thermischen Ausdehnungskoeffizienten des Gehäusekörpers (2) und des Drucksensorchips (1) in einem Temperaturbereich von größer oder gleich -50°C und kleiner oder gleich 200°C um weniger als 30%, bevorzugt um weniger als 20% und besonders bevorzugt um weniger als 10% voneinander abweichen.

9. Drucksensorsystem nach einem der vorherigen Ansprüche, wobei der Gehäusekörper (2) eine nicht-ebene dreidimensionale Oberflächentopographie auf der Montageseite aufweist und die Montageaufnahme (20) durch eine Erhöhung oder eine Vertiefung des Gehäusekörpers (2) gebildet wird und die Druckzuführung (22) in die Montageaufnahme (20) mündet.

10. Drucksensorsystem nach einem der vorherigen Ansprüche, wobei auf einer weiteren Montageaufnahme (20) des Gehäusekörpers (2) ein Signalverarbeitungschip (7) montiert ist.

11. Drucksensorsystem nach einem der Ansprüche 1 bis 10, wobei der Drucksensorchip (1) mittels eines starren Verbindungsmaterials (3) direkt auf der Montageaufnahme (20) montiert ist, das durch ein Glaslot, ein metallisches Lot oder einen Epoxidharzklebstoff gebildet wird.

12. Drucksensorsystem nach einem der vorherigen Ansprüche, wobei der Gehäusekörper (2) mittels eines keramischen Spritzgussverfahrens dreidimensional ausgeformt und monolithisch ausgebildet ist.

13. Drucksensorsystem nach einem der vorherigen Ansprüche, wobei das Drucksensorsystem elektrische Anschlüsse (4) auf dem Gehäusekörper (2) zum elektrischen Anschluss zumindest des Drucksensorchips (1) aufweist, die eines oder mehrere der folgenden Elemente aufweisen:
Verdrahtungsträger (41), Leiterbahnen (42), Bonddrähte (44).

14. Drucksensorsystem nach einem der vorherigen Ansprüche, wobei der Drucksensorchip (1) mittels Bonddrahtverbindungen (44) elektrisch kontaktiert ist, die mit einem Polymerverguss (5) bedeckt sind.

15. Drucksensorsystem nach einem der vorherigen Ansprüche, wobei das Drucksensorsystem einen Deckel (6) aufweist, der auf dem Gehäusekörper (2) über dem Drucksensorchip (1) durch eine mechanische Arretierung befestigt ist.
